(19) Europäisches Patentamt
European Patent Office
Office européen des brevets

(11) Numéro de publication: **0 255 102 A1**

# (12) DEMANDE DE BREVET EUROPEEN

(21) Numéro de dépôt: **87110890.8**

(22) Date de dépôt: **28.07.87**

(51) Int. Cl.⁴: **C09D 5/10** , C09D 3/58

(30) Priorité: **30.07.86 FR 8611238**

(43) Date de publication de la demande: **03.02.88 Bulletin 88/05**

(84) Etats contractants désignés: **AT BE CH DE ES GB GR IT LI LU NL SE**

(71) Demandeur: **Savin, Ronald**
**Residence l'Eden Place Jean Moulin**
**F-74200 Thonon les Bain(FR)**

(72) Inventeur: **Savin, Ronald**
**Residence l'Eden Place Jean Moulin**
**F-74200 Thonon les Bain(FR)**

(74) Mandataire: **Eggert, Hans-Gunther, Dr.**
**Räderscheidtstrasse 1**
**D-5000 Köln 41(DE)**

## (54) Compositions de révêtement contenant des pigments réactifs et possedant une excellente résistance à l'agression de l'environnement.

(57) Compositions de revêtement à base de pigments métalliques réactifs pour la protection de substrats métalliques ou non obtenues par le mélange de deux phases liquides et/ou pâteuses, l'une A contenant la matière polymère filmogène, l'autre B un agent de réticulation de ladite matière filmogène, l'une et l'autre phase contenant éventuellement divers autres adjuvants connus, se caractérisent en ce que, dans le but de leur conférer une excellente résistance à l'agression de l'environnement, en particulier à la corrosion, la phase A est formée : $A_1$ d'au moins un polymère filmogène comprenant au moins un groupe époxy par molécule ; $A_2$ éventuellement d'au moins un polymère vinylique ; $A_3$ d'au moins un pigment métallique réactif à une concentration d'au plus 70 % en poids par rapport à la masse totale desdites compositions ; $A_4$ d'au moins un agent de réglage de caractéristiques rhéologiques à une concentration d'au moins 1,8 % en poids par rapport à la masse totale et $A_5$ d'au moins un solvant organique desdits polymères $A_1$ et $A_2$ ; puis, la phase B est formée : $B_1$ d'au moins un durcisseur du polymère époxy ; $B_2$ éventuellement d'au moins un agent de réglage des caractéristiques rhéologiques et $B_3$ d'au moins un solvant organique compatible avec le durcisseur et la phase A.

EP 0 255 102 A1

# COMPOSITIONS DE REVETEMENT CONTENANT DES PIGMENTS REACTIFS ET POSSEDANT UNE EXCELLENTE RESISTANCE A L'AGRESSION DE L'ENVIRONNEMENT

La présente invention concerne des compositions de revêtement contenant des pigments réactifs mises en oeuvre pour la protection de substrats métalliques et non métalliques pour leur conférer une excellente résistance à l'agression de l'environnement, en particulier à la corrosion et une plus grande longévité.

L'invention concerne plus particulièrement des compositions anticorrosives de revêtement pour la protection de substrats métalliques et non métalliques, résultant du mélange de deux phases liquides et/ou pâteuses à base de solvants et/ou diluants organiques, l'une des phases contenant pour l'essentiel au moins un polymère filmogène possédant au moins un groupe époxy par molécule, un agent permettant le réglage des caractéristiques rhéologiques, et au moins un pigment réactif, tandis que l'autre phase contient au moins un durcisseur de polymère époxy.

Depuis longtemps déjà, il est connu d'appliquer sur les substrats métalliques ou non, sensibles à la corrosion ou à un vieillissement prématuré, un revêtement qui les protège de leur environnement, dénommé couche primaire.

De tels substrats à protéger sont par exemple, des coques et superstructures de navires, des plateformes off shore, des armatures métalliques, des ponts, des carrosseries automobiles, des citernes, des canalisations ou encore des pièces extérieures d'avion.

Tous ces substrats, quand ils sont mal protégés, subissent en effet des actions de transformation chimique, d'abord superficielles, puis de plus en plus à coeur, qui amoindrissent leurs caractéristiques physiques et plus particulièrement mécaniques, quand ils sont exposés à des conditions sévères d'environnement naturelles ou synthétiques, telles que la chaleur, le froid, les rayonnements ultraviolets, l'humidité en particulier saline, le vent, la pluie, l'eau de mer, la neige, les chocs de particules et autres facteurs nuisibles dûs à la pollution de l'atmosphère, ou encore des fluides liquides ou gazeux résultant de l'industrie chimique, biochimique, biologique ou autres.

Jusqu'à maintenant, et selon le substrat ainsi que son environnement, on a utilisé comme revêtements protecteurs diverses compositions préparées en milieu aqueux ou solvants organiques à partir de matières polymères aussi diverses que, par exemple, des résines phénoliques, des caoutchoucs chlorés, des polyesters, des polyuréthanes, des résines époxy, contenant également des pigments réactifs tels que, par exemple, les chromates de zinc, de plomb, de baryum, les phosphates de chrome, ou encore les oxydes métalliques tels que, oxydes de fer, de titane, de zinc, ainsi que certains métaux sous forme de poudres fines, tels que le zinc, l'aluminium, le cuivre, l'étain.

D'une manière plus particulière, la littérature spécialisée décrit et recommande des revêtements anticorrosifs contenant des pigments réactifs, à base de résines époxydiques, en milieu aqueux ou solvants organiques, pour la protection de substrats métalliques, mettant à profit la réactivité des groupes époxy à l'égard d'agents de durcissement tels que, par exemple, les polyamines aliphatiques ou aromatiques, les polyamides, conduisant ainsi à des systèmes homogènes par réaction d'addition.

De telles compositions de revêtements époxydiques ont acquis la réputation de constituer des films protecteurs ayant une bonne adhérence sur les matériaux usuels, ainsi que d'autres qualités essentielles aussi diverses que : souplesse, résistance aux agents chimiques, inaltérabilité en présence d'hydrocarbures et autres solvants organiques, résistance aux chocs mécaniques, à l'abrasion, aux cycles thermiques, ainsi qu'une bonne stabilité dimensionnelle et un faible retrait au durcissement.

A cet égard, le brevet français 2,307,024 par exemple, décrit des compositions de revêtement à base d'eau à appliquer à des supports ferreux pour obtenir des revêtements anticorrosifs qui comprennent, selon une seule phase :

a) une résine époxy liquide non volatile, de faible viscosité, dérivée du bisphénol A et par exemple de l'épichlorhydrine,

b) un polyamide modifié, c'est-à-dire un produit d'addition d'un polyamide soluble dans l'eau et d'une résine époxy liquide,

c) et, un pigment de poudre de zinc.

Un autre brevet (FR 2,244,805) décrit des compositions de revêtement protectrices durables pour substrats métalliques ou non métalliques, comme par exemple des pièces extérieures d'avions, exposées à des conditions atmosphériques sévères, qui sont des mélanges à des concentrations prédéterminées de (a) une résine époxy portant des groupements hydroxyles, (b) un durcisseur sous forme d'un polyisocyanate prédéterminé et (c) un agent de couplage sous forme d'un silane de type époxy. Ces compositions comprennent également des pigments tels que les chromates de zinc, un agent de suspension des pigments, un catalyseur permettant d'accélérer la réaction entre le durcisseur et la résine époxy et des solvants organiques destinés à la résine époxy et au durcisseur.

Or, bien que ces revêtements à base de résine époxy pour substrats métalliques ou non, aient amélioré d'une manière très sensible la prolongation de leur vie, on constate à l'usage que les meilleurs revêtements proposés par l'art antérieur présentent encore des inconvénients majeurs qui se manifestent, par exemple, par des boursouflures, des séparations du substrat à protéger, signes de mauvaises adhérences et/ou de corrosion prématurée, obligeant à des opérations fréquentes de reconstitution du revêtement protecteur.

De plus, les compositions anticorrosives appartenant à l'art connu contiennent des pigments réactifs à caractère toxique, dont l'usage est de plus en plus conteste. De tels pigments appartiennent au groupe des chromates, tels que le chromate de zinc, le chromate de strontium, le chromate colbateux, le silicochromate de plomb.

C'est pourquoi, l'homme de l'art tend à remplacer dans ces compositons anticorrosives les pigments réactifs toxiques, par des pigments métalliques non toxiques, tels que le zinc, l'aluminium, le cuivre, mis en oeuvre sous forme de poudre, mais à des concentrations beaucoup plus élevées que celles antérieurement recommandées (FR 2,307,024 précité).

De telles compositions anticorrosives de revêtement, très riches en zinc, sont décrites dans l'ouvrage : "Zinc Dust and Powder ; Their Production, Properties and Applications" by BRADFORF C., HAFFORD et Al - First edition, May 1982 - publié par International Lead .Zinc Research Organisation Inc. -292 Madison Avenue, N.Y. 10017 - pages 90 et 91. Ces compositions anticorrosives de revêtement, très riches en poudre de zinc, ont la réputation de permettre la réalisation de films protecteurs équivalents à un revêtement métallique anodique. Pour ce faire, ces compositions contiennent de 80 à 95 % en poids par rapport à la masse totale de poudre de zinc, moins de 1,8 % en poids d'un agent de mise en suspension des pigments (silice pyrogénée) et de ce fait, sont très pauvres en liants, c'est-à-dire en polymères filmogènes. Cette faible teneur en liant est considérée comme un avantage par l'homme de l'art puisqu'un excès isolerait par enrobage les grains métalliques les uns des autres et aussi du substrat à protéger avec lequel le contact doit être parfait (Volume II : "Peintures et Vernis" de Pierre GRANDOU et Paul PASTOUR - Edition 1982, page 39, publié par Hermann, Paris).

Mais l'usage de pigments métalliques à haute concentration génère d'autres inconvénients que ceux précités, qui se manifestent lors de la préparation, du stockage ou de la mise en oeuvre des compositions anticorrosives de revêtement les contenant.

Un premier inconvénient découle de la densité élevée de certains pigments métalliques, tels que le zinc, et consiste en une décantation rapide et gênante desdits pigments, même dans le cas de stockage de courte durée, décantation qui peut également se produire dans les tubulures des dispositifs de peinture par pulvérisation.

Un autre inconvénient procède de la forte réactivité des pigments métalliques à l'égard de certains substances présentes dans les compositions anticorrosives de revêtement. Cette réactivité se manifeste par une évolution importante des caractéristiques rhéologiques desdites compositions, par exemple, par une augmentation rapide et gênante de la viscosité dans le temps, avec l'apparition d'un gel, ou même la prise en masse desdites compositions avant usage.

Un troisième inconvénient réside dans le fait qu'il est quasiment impossible de disposer de compositions anticorrosives de revêtements ayant simultanément une haute concentration en pigments réactifs métalliques et une fluidité suffisante pour permettre une mise en oeuvre aisée. Car ces deux caractéristiques étant à l'opposé l'une de l'autre, les compositions de revêtement hautement concentrées en pigments métalliques sont très difficiles à déposer sur le substrat à protéger et dès lors donnent de mauvais revêtements de protection.

Un autre inconvénient se manifeste par le fait que ces compositions anticorrosives de revêtement à très haute concentration en pigments réactifs, généralement déposées en plusieurs couches, constituent pour le substrat à protéger une surcharge pondérale très importante qui peut être rédhibitoire pour leur emploi.

Plus que cela, l'état de surface du revêtement anticorrosif très riche en zinc ainsi réalisé sur le substrat à protéger, apparaît relativement rugueux, voire irrégulier, et dès lors, ne permet pas le dépôt d'une peinture de finition (top coat) esthétique parce que dépourvue d'aspérités.

De même, un autre inconvénient peut apparaître dans le fait que le substrat à protéger, en particulier quand il est en fer, doit subir des traitements de préparations de sa surface par l'un au moins des procédés mécaniques (sablage, brossage, grenaillage, martelage, brûlage), des procédés chimques (décalaminage par un acide, phosphatation, ...), voire l'usage de wash primer.

Enfin, un ultime inconvénient réside dans le fait que les compositions anticorrosives de revêtement appartenant à l'art connu ont une capacité à protéger les substrats métalliques contre la corrosion limitée dans le temps (en moyenne 1500 heures en brouillard salin - norme ASTM B117), alors qu'il est infiniment souhaitable d'augmenter ce temps de protection, en particulier dans la maintenance des plateformes off shore.

Dès lors, l'invention a pour but d'éliminer ces inconvénients par la mise au point de compositions de revêtement pour la protection de substrats métalliques ou non métalliques.

Selon l'invention, ces compositions se distinguent de l'art connu par le fait qu'elles contiennent une plus faible teneur en pigments métalliques réactifs, et une plus forte teneur en matières minérales siliceuses et qu'elles possèdent une excellente aptitude à se laisser déposer sur le substrat à protéger, qu'elles fournissent un revêtement très fortement adhérent, souple, résistant aux agents chimiques, aux chocs mécaniques et thermiques, disposant d'une excellente stabilité dimensionnelle et d'un faible retrait au durcissement, et bénéficiant d'une longévité exceptionnelle comparée à celle des meilleurs revêtements anticorrosifs actuellement préconisés.

Les compositions de revêtement à base de pigments réactifs selon l'invention, pour la protection de substrats métalliques ou non, se caractérisent en ce qu'elles comportent au moins une matière liante filmogène, au moins un pigment métallique réactif à raison d'au plus 70 % en poids par rapport à la masse totale et au moins un agent de réglage des caractéristiques rhéologiques à raison d'au moins 1,8 % en poids par rapport à la masse totale.

D'une manière plus particulière, les compositions de revêtement, à base de pigments métalliques réactifs selon l'invention, pour la protection de substrats métalliques ou non, obtenues par le mélange de deux phases liquides et/ou pâteuses, l'une (A) contenant la matière polymère filmogène, l'autre (B) un agent de réticulation de ladite matière filmogène, l'une et l'autre phase contenant éventuellement divers autres adjuvants connus, se caractérisent en ce que :

-la phase A est formée : $A_1$ d'au moins un polymère filmogène comprenant au moins un groupe époxy par molécules ; $A_2$ éventuellement d'au moins un polymère filmogène vinylique ; $A_3$ d'au moins un pigment métallique réactif à une concentration d'au plus 70 % en poids par rapport à la masse totale desdites compositions ; $A_4$ d'au moins un agent de réglage des caractéristiques rhéologiques à une concentration d'au moins 1,8 % par rapport à la masse totale, et $A_5$ d'au moins un solvant organique desdits polymères $A_1$ et $A_2$,

-la phase B est formée : $B_1$ d'au moins un durcisseur du polymère époxy ; $B_2$ éventuellement d'au moins un agent de réglage des caractéristiques rhéologiques, et $B_3$ d'au moins un solvant organique compatible avec le durcisseur et la phase (A).

Ainsi, et contrairement à l'art antérieur dans lequel des compositions anticorrosives de revêtement se composent d'un polymère époxy, d'un agent durcisseur dudit polymère et d'un pigment, à une teneur de 80 à 95 % en poids par rapport à la masse totale, les compositions selon l'invention associent, selon des combinaisons nouvelles, au moins un polymère filmogène comportant au moins une fonction époxy, éventuellement au moins un polymère et/ou copolymère filmogène vinylique, en présence d'au moins un durcisseur dudit polymère époxy muni de radicaux — $NH_2$ et/ou — COOH et d'au moins un pigment réactif à une teneur d'au plus 70 % en poids par rapport à la masse totale en présence d'un agent de réglage des carctéristiques rhéologiques.

Les compositions de revêtement selon l'invention manifestent d'une manière surprenante par une résistance extraordinairement prolongée aux agents agressifs à l'égard des substrats à protéger, puisque la longévité desdits revêtements dépasse les 3500 heures en test de vieillissement accéléré alors que les revêtements, issus de l'art antérieur, offrent une durée de vie de l'ordre de 1500 heures.

Les compositions anticorrosives de revêtement de la présente invention comprennent comme constituant essential au moins un polymère époxy contenant au moins une fonction époxy par molécule répondant à la formule :

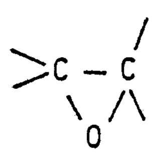

On peut, par exemple, utiliser le produit de la réaction d'une épihalohydrine, comme par exemple l'épichlorhydrine et d'un polyol, tel que le glycérol, un polyphénol, ou encore un bis-hydroxyphényl alcane.

Ces polymères époxy sont choisis parmi les polymères connus, de poids moléculaires moyens compris entre 350 et 3800, offrant un équivalent époxy de 140 à 4000 et un équivalent d'estérification de 80 à 240.

Préférentiellement, lesdits polymères époxy sont choisis parmi ceux dont le poids moléculaire moyen est compris entre 470 et 2900, ayant un équivalent époxy de 225 à 2050 et un équivalent d'estérification de 100 à 190.

Entrent également dans la définition, les polymères époxy dont les groupements hydroxyles latéraux sont estérifiés par des acides carboxyliques, tels que, par exemple, les acides gras comme l'acide laurique, les acides monocarboxyliques des huiles de ricin, de coprah et autres.

De tels polymères époxy sont connus sous les appellations commerciales telles que, par exemple, les Araldites (CIBA-GEIGY), Epophens (BORDEN CHEMICAL), Epikotes(SHELL CHEMICALS LTD)Rutapox-(BAKELITE LTD)Grilonits(EMSER WERKE) D.E.R (DOW CHEMICAL)Mod-epox (MONSANTO)Eurepox-(SCHERING)ou équivalents.

Les compositions anticorrosives de revêtement selon l'invention peuvent comporter comme autre constituant important au moins un polymère et/ou copolymère vinylique, en mettant à profit leurs intéressantes propriétés de résistance à l'eau, aux intempéries, leur dureté, leur souplesse et leur adhérence aux substrats métalliques à protéger, en particulier quand polymère et/ou copolymère vinylique sont modifiés par l'acide maléique.

Parmi les homopolymères et/ou copolymères concernés, on peut citer, à titre d'exemple, le chlorure de polyvinyle, le chlorure de polyvinylsurchloré, l'acétate de polyvinyle, les copolymères vinyliques, hydroxyles et/ou transformés par acide maléique. Ces polymères et/ou copolymères sont choisis parmi ceux connus, disposant d'un poids moléculaire moyen compris entre 5000 et 25000.

De tels polymères et/ou copolymères vinyliques sont connus sous les appellations commerciales telles que, par exemple : Ucar (VAGD, VYES) commercialisés par UNION CARBIDE,Laroflex MP35 de BASF, Vinnol WACKER CHEMIE, ou équivalents.

Le polymère époxy et le polymère et/ou copolymère vinylique sont introduits dans les compositions anticorrosives de revêtement selon des rapports pondéraux choisis entre 6:1 et 1:10.

Un troisième constituant essentiel entrant dans les compositions anticorrosives de revêtement est le durcisseur du polymère époxy. Cette substance est constituée par au moins un polymère muni de fonctions $-NH_2$ ou $-CONH_2$, $-NHR$ ou $-CONHR$ et/ou $-COOH$, qui réagit à travers ces fonctions avec le polymère époxy afin de durcir la composition.

Par exemple, les groupements $-NH_2$ ou $-NHR$ du durcisseur réagissent par addition avec les groupements époxy terminaux selon les réactions :

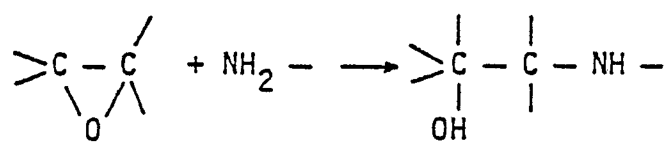

ou

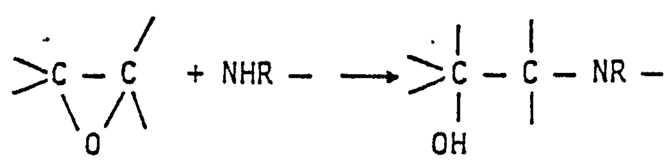

Les groupements $-COOH$ du durcisseur peuvent également intervenir selon une réaction d'estérification avec les groupements hydroxyles latéraux du polymère époxy, selon la réaction :

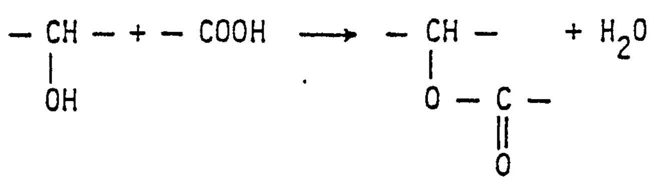

Le durcisseur est, de préférence, choisi parmi les polyamides résultant de la réaction d'un diacide sur une diamine comme cela est bien connu de l'homme de l'art.

De tels polyamides sont connus sous les appellations telles que,par exemple, Versamid,Euredur (SCHERING)Synolide (CRAY VALLEY) ou équivalents.

Le polymère époxy et le durcisseur amidé et/ou aminé sont introduits dans les compositions anticorrosives de revêtements selon les rapports pondéraux choisis entre 6:1 et 1:1 et préférentiellement entre 3:1 et 1:1.

Un catalyseur de réaction entre le polymère époxy et le durcisseur peut être également introduit pour améliorer la réaction entre ces deux composants. On peut utiliser, par exemple, des composés organométalliques, ou encore des amines et/ou polyamines, à raison de 0,1 à 5 % en poids par rapport au polymère époxy.

Les compositions anticorrosives de revêtement comprennent également au moins un pigment métallique réactif tel que, par exemple, le zinc, l'aluminium, le cuivre, le magnésium, le titane, le silicium, le zirconium, et éventuellement le plomb et l'étain et leurs oxydes, se présentant sous forme pulvérulente.

Les pigments métalliques réactifs interviennent dans des compositions selon l'invention à raison d'au plus 70 % en poids par rapport à la masse totale, généralement à raison de 30 % à 60 %.

Les compositions de revêtement selon l'invention comprennent également un agent de réglage des caractéristiques rhéologiques qui est introduit dans la phase A ainsi que éventuellement dans la phase B. Cet agent qui assure simultanément une bonne dispersion des pigments métalliques et leur maintien en suspension est constitué par un mélange élaboré de matières minérales siliceuses constitué d'au moins une silice pyrogénée et éventuellement d'au moins une silice naturelle et/ou de transformation (silice N et/ou T).

Le rapport pondéral : $SiO_2$(N et/ouT) / $SiO_2$ pyrogénée, au sein du mélange de matières minérals siliceuses constituant l'agent de réglage des caractéristiques rhéologiques est choisi dans l'intervalle de 0 à 30 et préférentiellement dans l'intervalle de 0 à 20. L'agent de réglage des caractéristiques rhéologiques étant introduit dans les compositions de revêtement selon l'invention à raison d'au moins 1,8 % en poids par rapport à la masse totale desdites compositions généralement compris entre 2 et 30 % et préférentiellement compris entre 3 et 25 % en poids de la masse totale desdites compositions.

Les silices pyrogénées sont celles dont les particules, de formes sphériques, s'agglomèrent en flocons, disposant d'une surface spécifique BET compris entre 50 et 750 $m^2g^{-1}$. De telles silices pyrogénées découlent de traitements spécifiques comme par exemple l'hydrolyse du tétrachlorure de silicium à haute température ou encore par transformation de la silice à l'arc électrique. Elles sont connues sous les noms de marques Aerosil, Cabosil et commercialisées par des sociétes telles que DEGUSSA, CABOT Corporation, DOW CORNING.

Les silices naturelles et/ou de transformation sont choisies parmi les silices cristallines naturelles ou parmi celles obtenues par les transformations autres que pyrogénées connues de l'homme de l'art, telles que, par exemple, les silices obtenues par voie humide (silices précipitées, gels de silice ou silices hydrothermales) et de finesses adaptées à celle du ou des pigments métalliques mis en oeuvre dans lesdites compositions.

Les silices naturelles et/ou de transformation peuvent être souhaitablement choisies parmi celles ayant une prise d'huile mesurée selon la norme ASTM D281-84, préférentiellement au plus égale à 90 et très préférentiellement au plus égale à 40.

On peut, également, introduire dans lesdites compositions, d'autres pigments tels que des pigments organiques résistants à la lumière et/ou à la chaleur, et/ou des pigments minéraux non réactifs tels que, par exemple, l'oxyde de titane et les autres pigments dérivés du titane, le sulfate de baryum, le carbonate de calcium, le kaolin, le talc, le mica, les argiles, les oxydes de fer, le noir de carbone, les oxydes de chrome, les sels métalliques tels que chromate de zinc, chromate de strontium, ainsi que les fibres de Kevlar de carbone.

Il peut être souhaitable d'introduire avec les pigments un agent mouillant qui favorise le contact intime entre les particules solides et le milieu constitué par les polymères et les solvants. Un tel agent peut être choisi, par exemple, parmi les tensioactifs fluorés non ioniques, tels que les esters fluoroalkyles. De tels produits sont commercialisés, par exemple, par la société 3M (références FC430 et FC431).

Les compositions de revêtement peuvent également comporter un agent de couplage destiné à favoriser l'accrochage desdites compositions sur le substrat à protéger. Cet agent peut être choisi dans la famille des silanes, composés organosiliciques comportant préférentiellement un groupement fonctionnel époxy. De tels agents de couplages sont commercialisés par exemple, par la société DOW CORNING ou RHONE-POULENC,sous les références 200 Silicone Fluid,Z-6040 Silane.

Les agents mouillants, les agents de couplage et les pigments autres que les pigments réactifs précités sont introduits dans les compositions selon des pourcentages bien connus de l'homme de l'art et adaptés à chaque composition.

Enfin, les compositions de revêtement comportent un mélange de solvants organiques fortement polaires permettant le maintien en solution des polymères époxy et éventuellement polyvinyle d'une part et du durcisseur du polymère époxy d'autre part, jusqu'à leur réaction. On peut citer à titre d'exemple, les solvants préférentiellement utilisés : les cétones tels que l'acétone, la méthyléthylcétone, la méthylpropylcétone, la méthylisobutylcétone, la méthylamylcétone, la cyclohexanone, les alcools tels que butanol, isopropanol, le méthylglycol, l'éthylglycol, le méthylisobutylcarbinol, l'isopropylglycol, des solvants aromatiques tels que le toluène, le xylène.

En pratique, et comme cela a été dit, les compositions selon l'invention sont obtenues par le mélange de deux phases liquides et/ou pâteuses.

La première phase (A) est formée par le mélange du (des) polymère(s) époxy, éventuellement du (des) polymère(s) et/ou copolymère(s) vinylique(s), du (des) pigment(s) réactif(s), du ou des agents de réglage des caractéristiques rhéologiques, éventuellement un catalyseur de réaction entre le(s) polymère(s) époxy et le durcisseur, et le ou les solvants organiques permettant la solubilisation du (des) constituant(s) précité-(s). Cette phase peut également contenir l'agent mouillant ainsi que l'agent de couplage des pigments non réactifs ainsi que tous autres agents bien connus.

La deuxième phase (B) est formée par le durcisseur et le ou les solvants organiques permettant la solubilisation dudit durcisseur, mais elle peut également contenir des pigments organiques et/ou minéraux non réactifs, l'agent mouillant, l'agent de réglage des caractéristiques rhéologiques, de même que l'agent de couplage ainsi que le catalyseur de réaction entre le(s) polymère(s) époxy et le durcisseur.

D'une manière générale, les compositions de revêtement selon l'invention obtenues par le mélange des deux phases liquides et/ou pâteuses, l'une (A) contenant la matière polymère filmogène, l'autre (B) l'agent de réticulation, se composent des quantités exprimées en pour cent en poids des diverses substances principales constitutives, étant entendu que l'une et l'autre phase (A) et (B) peuvent également contenir d'autres agents spécifiques bien connus dans le domaine des peintures.

Les compositions de revêtement comportent, exprimées en pour cent en poids et globalement par rapport à la masse totale desdites compositions :

-de 2 a 20 pour cent en poids d'au moins un polymère filmogène comprenant au moins un groupe époxy par molécule,

-de 0 à 20 pour cent en poids d'au moins un polymère filmogène vinylique,

-de 30 à 60 pour cent en poids et de préférence de 35 à 55 pour cent en poids d'au moins un pigment réactif métallique,

-de 2 à 30 pour cent en poids et de préférence de 3 à 25 pour cent en poids d'au moins un agent de réglage des caractéristiques rhéologiques desdites compositions,

-de 2 à 30 pour cent en poids d'au moins un durcisseur du polymère filmogène époxy,

-de 10 à 30 pour cent en poids de solvants.

Le mélange des deux phases est souhaitablement réalisé par l'homme de métier au moment où les compositions sont mises en oeuvre pour revêtir les substrats à protéger. Ce mélange peut être même effectué dans un intervalle de temps précédant son utilisation pouvant atteindre cinq jours, selon la quantité de catalyseur présente dans l'une des deux phases et selon la température ambiante.

Les compositions anticorrosives de revêtement selon l'invention peuvent être appliquées sur un substrat suivant l'un quelconque des procédés connus, y inclus les procédés de la pulvérisation à l'air comprimé, de pulvérisation par champ électrostatique, de pulvérisation à chaud ou de pulvérisation sans air.

Leur application comme couche primaire ne nécessite pas d'une manière obligatoire les nombreux traitements de préparation de la surface à protéger par les procédés mécaniques (sablage, brossage, grenaillage ou autres) ou les procédés chimiques (décalaminage par un acide, phosphatation ou autres). Car seul le traitement de dégraissage de ladite surface apparaît être d'utilité.

Ces procédés d'application permettent d'obtenir des couches d'une épaisseur à l'état sec comprise entre 10 et 100 microns, sans qu'il y ait apparition de coulée en nappe, ni de cisaillement du pigment métallique.

Dès lors qu'elles sont déposées sur le substrat à protéger, les compositions de revêtement selon l'invention durcissent rapidement à la température ambiante.

Le temps de durcissement des compositions selon l'invention dépend essentiellement des paramètres bien connus de l'homme de l'art, c'est-à-dire de la température, des concentrations des diverses substances présentes et des pigments réactifs, de la concentration en solvant organique et enfin de l'épaisseur du revêtement.

Toutefois, le délai de recouvrement par une peinture de finition (top coat) après l'application d'une couche primaire sur le substrat à protéger, réalisée au moyen des compositions selon l'invention peut être très court, sensiblement de l'ordre de dix minutes, permettant ainsi un achèvement rapide sans perte de temps.

Les compositions de revêtement selon l'invention peuvent être mises en oeuvre jusqu'à des températures hivernales de l'ordre de -10° C.

Les compositions anticorrosives selon l'invention donnent des revêtements adhérant forement au substrat traité, mais souple, qui résistent bien aux agents chimiques, au choc mécanique, à l'abrasion, au choc thermique. En particulier, lesdites compositions sont très efficaces pour la protection des substrats métalliques contre la corrosion, leur efficacité étant sensiblement trois fois celle des compositions anticorrosives de revêtement appartenant à l'art connu.

L'invention sera mieux comprise grâce aux exemples illustratifs d'application.

EXEMPLE 1

On a préparé les deux phases (A) et (B) d'une composition anticorrosive de revêtement selon l'invention en mélangeant les substances nécessaires à l'une et l'autre phase selon des quantités exprimées en pour cent en poids par rapport à la masse totale.

TABLEAU 1

Phase (A) : Polymères filmogènes et pigments réactifs

| | |
|---|---|
| - Polymère époxy 1001 F de SHELL | 9,02 % en poids |
| - Polymère et/ou copolymère de chlorure de vinyle Ucar VAGD de UNION CARBIDE | 3,76 % en poids |
| - Agent de réglage des caractéristiques rhéologiques : Aerosil 200 de DEGUSSA | 1,50 % en poids |
| - Agent tensioactif FC430 de 3M Company | 0,27 % en poids |
| - Pigment chromogène, oxyde de chrome | 3,00 % en poids |
| - Pigment réactif métallique, poudre de zinc | 42,13 % en poids |
| - Agent de couplage Silicone | 0,24 % en poids |
| - Solvants : | |
| Butanol | 1,02 % en poids |
| Mélange de méthyléthyl cétone, méthylpropylcétone et de méthylamylcétone | 0,24 % en poids |

## TABLEAU 2

Phase (B) : Durcisseur

| | |
|---|---|
| - Durcisseur polymère polyamide 115 X 75 de HENKEL | 5,12 % en poids |
| - Agent de réglage des caractéristiques rhéologiques : Silice (Novacite de MALVERN MINERALS, Company) | 16,55 % en poids |
| - Solvants : | |
| Butanol | 1,02 % en poids |
| Xylol | 16,13 % en poids |

Le rapport pondéral $SiO_2$ naturel et/ou de transformation / $SiO_2$ pyrogénée était égal à : 11,03.

On a mélangé ensuite les deux phases à raison de 100 parties en poids de l'une pour 100 parties en poids de l'autre. Le mélange était très fluide. Puis on a revêtu les recto de plaquettes expérimentales. Après un temps de séchage de 20 minutes à une température ambiante, on a fait durcir ladite couche pendant plusieurs heures, puis on a testé le revêtement selon les normes ASTM précitées. On a préparé ainsi 6 groupes de 7 plaquettes, à chaque groupe correspondant un substrat en acier laminé à froid.

Le premier groupe avait été simplement dégraissé au moyen de perchloréthylène. Le deuxième groupe avait été dégraissépuis sablé. Le troisième groupe avait été dégraissé puis avait subi un traitement de phosphatation. Enfin, le quatrième groupe avait été laissé dans l'état.

Les tests ci-après ont été réalisés conformément aux normes fédérales américaines 141a.

Dans un premier essai, on détermine la résistance des plaquettes revêtues au brouillard salin (Salt Spray Test) en les exposant, revêtues de la composition précitée, à la pulvérisation pendant 2500 heures d'une solution aqueuse contenant du NaCl à raison de 5 % en poids, maintenue à une température de 41°C.

Au bout de ce temps, l'examen n'a révélé aucun cloquage ou amorce de corrosion. Ce test a été poursuivi jusqu'à un temps de 3500 heures, l'examen des plaquettes étant toujours négatif.

Dans un deuxième essai (essai d'adhérence à l'humidité et essai d'adhérence par application d'un ruban), les plaquettes revêtues ont été immergées pendant 24 heures dans de l'eau distillée. Au bout de ce temps et après séchage, des rayures parallèles ont été tracées au moyen d'un stylet sur le revêtement. Après avoir appliqué un ruban adhésif, puis arraché ledit ruban, les revêtements se sont révélés être très fortement adhérents et exempts de cloque ou de décollement.

Dans un troisième essai, les plaquettes revêtues ont été immergées à température ambiante et pendant 30 jours dans un fluide hydraulique. Au terme de cette période, les plaquettes revêtues ne présentaient aucun ramollissement, aucune diminution d'épaisseur, ni aucune perte d'adhérence.

Dans un quatrième essai, les plaquettes revêtues ont été soumises à un test de souplesse qui consiste après avoir conditionné lesdites plaquettes à une température de 23° C et à une humidité relative de 50 % à les placer sur un mandrin cylindrique en acier de 3 millimètres de diamètre (côté revêtu vers le haut). Après plusieurs pliures sur le mandrin, les revêtements ne présentaient aucune fissure.

Dans un cinquième essai, les plaquettes revêtues ainsi que le mandrin précité ont été conditionnés pendant 48 heures à une température de -40° C. Puis, les plaquettes ont été pliées autour du mandrin. A l'issu de ce test, aucune fissure ou perte d'adhérence n'ont été observées.

Dans un sixième essai, les plaquettes revêtues ont été soumises à un essai de choc au moyen d'une bille d'acier pesante (27 kg). A l'issu du test, aucune fissure, rupture ou détérioration du revêtement n'étaient observables.

Ainsi les revêtements réalisés au moyen des compositions selon l'invention offrent une très forte adhérence et absence de corrosion dans les conditions d'humidité élevée, d'agression par les sels marins, de flexion et de choc.

EXEMPLE 2

On a préparé les deux phases A et B d'une autre composition anticorrosive de revêtement selon l'invention en mélangeant les substances nécessaires à l'une et l'autre phase selon les quantités exprimées en pour cent en poids par rapport à la masse totale.

TABLEAU 3

Phase (A) : Polymères filmogènes et pigments réactifs

| | |
|---|---|
| - Polymère époxy 1001 F de SHELL | 6,63 % en poids |
| - Polymère et/ou copolymère de vinyle Ucar VYES de UNION CARBIDE | 2,95 % en poids |
| - Agent de réglage des caractéristiques rhéologiques (Aerosil 300 et 974 de DEGUSSA) | 0,74 % en poids |
| - Agent tensioactif FC430 de 3M Company | 0,06 % en poids |
| - Antimousse : BYK 052 de BYK CHEMIE | 0,15 % en poids |
| - Pigment $TiO_2$ | 0,15 % en poids |
| - Pigment chromogène, chromate de zinc | 5,90 % en poids |
| - Pigment réactif métallique, poudre de zinc | 44,25 % en poids |
| - Solvants : Mélange de méthyléthylcétone et de méthylamylcétone | 6,63 % en poids |

TABLEAU 4

Phase (B) : Durcisseur

| | |
|---|---|
| - Durcisseur polyamide, sylmamide 200 | 4,72 % en poids |
| - Agent de réglage des caractéristiques rhéologiques, mélange d'Aerosil et de $SiO_2$ (Novacite) de MALVERN | 17,15 % en poids |
| - Agent tensioactif FC430 de 3M Company | 0,06 % en poids |
| - Pigment $TiO_2$ | 0,15 % en poids |
| - Solvants : Mélange d'éthylène glycol et butanol | 10,46 % en poids |

Le rapport pondéral $SiO_2$ naturel ou de transformation / $SiO_2$ pyrogénée était de 9,70.

On a mélangé les deux phases à raison de 100 parties en poids de l'une pour 100 parties de l'autre. Tous les essais décrits dans l'exemple 1 ont été réalisés sur des plaquettes expérimentales en acier.

Les revêtements réalisés au moyen de ladite composition selon l'invention révèlent une très forte adhérence, une absence de corrosion dans les conditions d'humidité élevée, d'agression par les sels, de flexion et de choc.

EXEMPLE 3

On a préparé les deux phases A et B d'une composition de revêtement selon l'invention en mélangeant les substances nécessaires à l'une ou l'autre phase selon les quantités exprimées en pour cent en poids par rapport à la masse totale.

TABLEAU 5

Phase (A) : Polymère filmogène et pigments réactifs

| | |
|---|---|
| - Polymère époxy 1001 F de SHELL | 5,99 % en poids |
| - Agent de réglage des caractéristiques rhéologiques, mélange de silice naturelle et d'Aerosil (300 et 974) | 4,79 % en poids |
| - Agent tensioactif FC 430 de 3M Company | 0,05 % en poids |
| - Antimousse BYK 052 de BYK CHEMIE | 0,20 % en poids |
| - Pigment réactif métallique, poudre de cuivre | 53,23 % en poids |
| - Solvants: Mélange de méthyléthyl, méthylpropyl et méthyamylcétone | 7,53 % en poids |

TABLEAU 6

Phase (B) : Durcisseur

| | |
|---|---|
| - Durcisseur polymère polyamide, commercialisé sous la marque Sylmamid 200 | 5,07 % en poids |
| - Agent de réglage des caractéristiques rhéologiques, mélange de silice naturelle et d'Aerosil (300 et 974) | 13,97 % en poids |
| - Agent tensioactif FC430 de 3M Company | 0,05 % en poids |
| - Antimousse BYK 052 de BYK CHEMIE | 0,13 % en poids |
| - Solvants : Butanol | 8,99 % en poids |

Le rapport pondéral $SiO_2$ naturelle et/ou de transformation / $SiO_2$ pyrogénée était de 11,82.

Les deux phases ont été mélangées à raison de 100 parties en poids de l'une pour 100 parties en poids de l'autre. Tous les essais décrits dans l'exemple 1 ont été réalisés sur des plaquettes expérimentales en acier.

Les revêtements réalisés au moyen de ladite composition selon l'invention ont révélé une excellente adhérence, une très bonne résistance aux effets de flexion et chocs ainsi qu'aux conditions d'humidité élevée et d'agression par les sels.

**Revendications**

1°/ Compositions de revêtement pour la protection de substrats métalliques ou non, obtenues par le mélange de deux phases liquides et/ou pâteuses, l'une (A) contenant la matière polymère filmogène en présence de solvants appropriés, l'autre B, un agent réticulant du polymère filmogène en présence de solvants appropriés, l'une et l'autre phase contenant éventuellement divers autres adjuvants connus, caractérisées en ce que, dans le but de leur conférer une excellente résistance à l'agression de l'environnement :

-la phase A comporte au moins un pigment métallique réactif à raison d'au plus 70 % en poids par rapport à la masse totale,
-les phases A et/ou B comportent au moins un agent de réglage des caractéristiques rhéologiques à raison d'au moins 1,8 % en poids par rapport à la masse totale.

2°/ Compositions de revêtement selon la revendication 1 pour la protection de substrats métalliques ou non, obtenues par le mélange de deux phases liquides et/ou pâteuses, l'une (A) contenant la matière polymère filmogène, l'autre (B) , un agent de réticulation, l'une et l'autre phase contenant éventuellement diverses autres adjuvants connus, caractérisées en ce que, dans le but de leur conférer une excellente résistance en particulier à l'agression de l'environnement :
-la phase A est formée : $A_1$ d'au moins un polymère filmogène comprenant au moins un groupe époxy par molécule ; $A_2$ éventuellement au moins un polymère filmogène vinylique ; $A_3$ d'au moins un pigment métallique réactif à une concentration d'au plus 70 % en poids par rapport à la masse totale ; $A_4$ d'au moins un agent de réglage des caractéristiques rhéologiques à une concentration d'au moins 1,8 % en poids par rapport à la masse totale et $A_5$ d'au moins un solvant organique desdits polymères $A_1$ et $A_2$.
-la phase B est formée : $B_1$ d'au moins un durcisseur du polymère époxy, $B_2$ éventuellement d'au moins un agent de réglage des caractéristiques rhéologiques et $B_3$ d'au moins un solvant organique compatible avec le durcisseur et la phase A.

3° / Compositions de revêtement selon l'une quelconque des revendications 1 ou 2, caractérisées en ce qu'elles comportent globalement en pour cent en poids par rapport à la masse totale, de 2 à 30 % en poids d'au moins un polymère filmogène comprenant au moins un groupe époxy par molécule ; de 0 à 20 % en poids d'au moins un polymère filmogène vinylique ; de 30 à 60 % en poids et préférentiellement de 35 à 55 % en poids d'au moins un pigment réactif métallique ; de 2 à 30 % en poids et préférentiellement de 3 à 25 % en poids d'au moins un agent de réglage des caractéristiques rhéologiques ; de 2 à 30 % en poids d'au moins un durcisseur du polymère filmogène époxy ; de 10 à 30 % en poids des solvants.

4°/ Compositions de revêtement selon les revendications 2 ou 3, caractérisées en ce que le polymère époxy est choisi parmi ceux ayant un poids moléculaire moyen compris entre 350 et 3800, préférentiellement compris entre 470 et 2900, un équivalent époxy compris entre 140 et 4000, et préférentiellement entre 225 et 2050 et un équivalent d'estérification compris entre 80 et 240, et préférentiellement entre 100 et 190.

5°/ Compositions de revêtement selon l'une quelconque des revendications 1 à 4, caractérisées en ce que le polymère et/ou copolymère de vinyle est choisi parmi ceux ayant un poids moléculaire moyen compris entre 500 et 25000.

6°/ Compositions de revêtement selon l'une quelconque des revendications 1 à 5, caractérisées en ce que le polymère et/ou copolymère de vinyle est choisi parmi les chlorures de polyvinyle, les chlorures de polyvinyle surchlorés, acétate de vinyle, chlorure et acétate de vinyle, les copolymères vinyliques hydroxylés et/ou transformés par l'acide maléique.

7°/ Compositions de revêtement selon l'une quelconque des revendications 1 à 6, caractérisées en ce que le rapport pondéral polymère époxy / polymère et/ou copolymère de vinyle est compris entre 6:1 et 1:10.

8° / Compositions de revêtement selon l'une quelconque des revendications 1 à 7, caractérisées en ce que le rapport pondéral polymère époxy / durcisseur est compris entre 6:1 et 1:1, et préférentiellement 3:1 et 1:1.

9°/ Compositions de revêtement selon l'une quelconque des revendications 1 à 8, caractérisées en ce qu'on introduit un catalyseur de réaction entre le polymère époxy et le durcisseur à raison de 0,1 à 5 % en poids par rapport au polymère époxy.

10°/ Compositons de revêtement selon la revendication 9, caractérisées en ce que le catalyseur est un composé organométallique, une amine, une polyamine.

11°/ Compositions de revêtement selon l'une quelconque des revendications 1 à 10, caractérisées en ce que le pigment réactif métallique est choisi dans le groupe constitué par le zinc, le cuivre, l'aluminium, la magnésium, le titane, le silicium, le zirconium, le plomb et l'étain et leurs oxydes.

12°/ Compositions de revêtement selon l'une quelconque des revendications 1 à 11, caractérisées en ce que l'agent de réglage des caractéristiques rhéologiques est constitué par un mélange élaboré de matières minérales siliceuses formé d'au moins une silice pyrogénée et éventuellement d'au moins une silice naturelle et/ou de transformation.

13°/ Compositions de revêtement selon la revendication 12, caractérisées en ce que le rapport pondéral $SiO_2$ naturelle et/ou de transformation / $SiO_2$ pyrogénée est choisi dans l'intervalle de 0 à 30 et préférentiellement de 0 à 20.

14°/ Compositions de revêtement selon les revendications 12 et 13 caractérisées en ce que les silices naturelles et/ou de transformation sont choisies parmi celles ayant une prise d'huile mesurée selon la norme ASTM D281-84, préférentiellement au plus égale à 90 et plus préférentiellement au plus égale à 40.

15°/ Compositions de revêtement selon l'une quelconque des revendications 1 à 14, caractérisées en ce que les solvants sont choisis parmi le groupe constitué par les cétones, telles que l'acétone, la méthyléthylcétone, la méthylpropylcétone, la méthylisobutylcétone, la méthylamylcétone, la cyclohexanone ; par les alcools, tels que le butanol, l'isopropanol, le méthylglycol, l'éthylglycol, le méthylisobutylcardinol, l'isopropylglycol ; les solvants aromatiques, tels que le toluène, xylène.

Office européen des brevets

# RAPPORT DE RECHERCHE EUROPEENNE

Numero de la demande

EP 87 11 0890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| X | EP-A-0 096 955 (MOBIL OIL)<br>* Revendications 1-8 *<br>--- | 1,4,8, 11,15 | C 09 D 5/10<br>C 09 D 3/58 |
| X | US-A-4 391 855 (THURLOW GEECK)<br>* Colonne 9, revendications 1,6,7; colonne 5-6, exemple 1 *<br>--- | 1,11, 15 | |
| X | EP-A-0 132 091 (MOBIL OIL)<br>* Abrégé; page 7, exemple 3 *<br>--- | 1,11, 15 | |
| A | US-A-4 075 153 (ANGELO FRANK LEO)<br>----- | | |

| DOMAINES TECHNIQUES RECHERCHES (Int. Cl.4) |
|---|
| C 09 D |

Le présent rapport de recherche a été établi pour toutes les revendications

| Lieu de la recherche | Date d'achèvement de la recherche | Examinateur |
|---|---|---|
| LA HAYE | 30-10-1987 | GIRARD Y.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant